(19) Europäisches Patentamt
European Patent Office
Office européen des brevets

(11) EP 1 431 245 A1

(12) **EUROPÄISCHE PATENTANMELDUNG**

(43) Veröffentlichungstag:
**23.06.2004 Patentblatt 2004/26**

(51) Int Cl.[7]: **C01B 33/158**, C09C 1/30, C09D 7/12

(21) Anmeldenummer: **02028311.5**

(22) Anmeldetag: **17.12.2002**

(84) Benannte Vertragsstaaten:
**AT BE BG CH CY CZ DE DK EE ES FI FR GB GR IE IT LI LU MC NL PT SE SI SK TR**
Benannte Erstreckungsstaaten:
**AL LT LV MK RO**

(71) Anmelder: **Degussa-Hüls Aktiengesellschaft
45764 Marl (DE)**

(72) Erfinder:
- **Jürgen Meyer
63811 Stockstadt/main (DE)**
- **Horst Zeizinger
63456 Hanau (DE)**
- **Manfred Ettlinger
63791 Karlstein (DE)**
- **Hans Dieter Christian
63755 Alzenau (DE)**

(54) **Oberflächenmodifizierte, aerogelartige, strukturierte Kieselsäure**

(57) Oberflächenmodifizierte, aerogelartige, strukturierte Kieselsäure wird hergestellt, indem man eine aerogelartige, strukturierte Kieselsäure mit einem Silanisierungsmittel besprüht, nachmischt und tempert.
Es kann als Mattierungsmittel eingesetzt werden.

EP 1 431 245 A1

## Beschreibung

Die Erfindung betrifft eine oberflächenmodifierte, aerogelartige, strukturierte Kieselsäure.

Unter Aerogelen sind Kieselgele mit geringem Schüttgewicht (ca. 20 bis 50 g/l) und hoher Makroporosität (DBP-Zahlen von 200 bis 400) zu verstehen. Aufgrund des von R. Iler beschriebenen Kontraktionseffektes, der bei der Trocknung von Kieselgelen aus wäßriger Phase zu einem Zusammenbruch der Porenstruktur führt, sind Kieselsäureaerogele nur nach dem von Kistler in der US-PS 2,249,767 beschriebenen Verfahren zugänglich. Kistler entwässert hierzu Kieselsäuresole teilweise mit Alkoholen und trocknet dann das wasserhaltige Alkogel im Autoklaven durch Entspannen unter überkritischen Bedingungen.

Auf diese Weise erhält er besonders locker aufgebaute Strukturen aus den Primärteilchen des Kieselsäuresols, die hohe Volumenwerte im Bereich der Makroporen (>300 Å) bei sehr geringer scheinbarer Dichte (Schüttgewicht) haben.

Diese als Aerogel bezeichneten Stoffe dienen je nach dem Grad ihrer Porosität und ihres Schüttgewichts als Füllstoffe, Trägerkieselsäuren, Mattierungsmittel, Verdickungsmittel etc.. Das Verfahren zur Herstellung dieser Aerogele ist durch den erforderlichen Einsatz organischer Lösungsmittel und die im Autoklaven auszuführende überkritische Trocknung technisch und wirtschaftlich sehr aufwendig.

Es ist bekannt, daß man die geschilderten Nachteile der bisher zur Herstellung der Aerogele zur Verfügung stehenden Verfahren vermeiden kann, wenn man anstelle der Teilchen eines Kieselsols Primärteilchen pyrogen hergestellter Kieselsäuren einsetzt und auf eine Gewinnung aus flüssiger Phase verzichtet.

Die Primärteilchen der pyrogenen Kieselsäure liegen in Schüttungen locker assoziiert über elektrostatische und van der Waal'sche Kräfte vor.

Sie bilden Flocken, welche einen hohen Luftgehalt aufweisen und daher ein sehr hohes scheinbares Porenvolumen und entsprechend ein niedriges Schüttgewicht haben.

Eine Schüttung dieser Flocken bezeichnet man am besten als Luftdisperion. Die Flocken sind allerdings instabil und werden, im Gegensatz zu den Sekundärteilchen der Kistler'schen Aerogele, schon bei geringster mechanischer Beanspruchung bis auf die Primärteilchen abgebaut.

Es ist bekannt, aerogelartige strukturierte Kieselsäure als Mattierungsmittel in Oberflächenbeschichtungen, wie zum Beispiel Lacken, einzusetzen (DE 24 14 478).

Gegenstand der Erfindung ist eine aerogelartige, strukturierte Kieselsäure, welche dadurch gekennzeichnet ist, daß sie oberflächenmodifiziert ist.

Beispielsweise kann als Ausgangskieselsäure eine aerogelartige, strukturierte Kieselsäure gemäß DE 2 414 878 eingesetzt werden.

Ausgangskieselsäure für die Oberflächenmodifizierung kann auch eine aerogelartige strukturierte Kieselsäure mit folgenden Stoffparametern sein:

BET-Oberfläche zwischen 80-450 $m^2/g$
Schüttgewicht zwischen 10-60 g/l
DBP-Zahl zwischen 200 bis 400
pH-Wert von 6-8

Die aerogelartige strukturierte Kieselsäure kann hergestellt werden, indem man in luftdispergierte pyrogene Kieselsäure 5-50 Gew.-% Wasser unter gleichmäßiger Verteilung einarbeitet und die erhaltene pulverförmige Mischung trocknet.

Da das Volumen der Kieselsäure bei der Einarbeitung des Wassers nur geringfügig abnimmt, ist anzunehmen, daß die ursprünglich vorhandene Assoziation der Primärteilchen der luftdispergierten pyrogenen Kieselsäure im wesentlichen erhalten bleibt. Durch die Beladung mit Wasser kommt es wahrscheinlich zu einer Anlösung der Kieselsäureoberfläche, so daß hier gelöste Kieselsäure vorliegt.

Diese verkittet beim nachfolgenden Trocknen die Primärteilchen an deren Berührungsstellen.

Es entsteht also durch gezieltes Beladen mit Wasser und anschließendes Trocknen aus einer pyrogenen Kieselsäure eine den Kistler'schen Aerogelen entsprechende dispergierstabile Substanz mit hohem Makroporenvolumen und sehr geringer scheinbarer Dichte (Schüttgewicht).

Es wurde weiterhin festgestellt, daß die vor der Einarbeitung des Wassers vorliegende scheinbare, durch die Packungsdichte der pyrogenen Kieselsäure in Luft bestimmte Struktur, welche durch ihre scheinbare Dichte (Schüttgewicht) zum Ausdruck kommt, einen deutlichen Einfluß auf das nach dem erfindungsgemäßen Prozeß zugängliche Produkt hat: Je voluminöser das Ausgangsprodukt ist, desto voluminöser fällt das Endprodukt aus.

Pyrogen hergestellte Kieselsäure ist bekannt aus Ullmann's Enzyklopädie der technischen Chemie 4. Auflage, Band 21, Seite 462 folgende.

Sie kann hergestellt werden durch Flammenhydrolyse von flüchtigen beziehungsweise verdampfbaren Siliciumverbindungen, wie zum Beispiel $SiCl_4$, Methyltrichlorsilan u.a., in der Knallgasflamme.

Als zweckmäßig hat sich erwiesen, daß man zur Herstellung der erfindungsgemäßen Produkte pyrogene Kieselsäure mit einem Schüttgewicht von 10 bis 60, vorzugsweise 15 bis 30, insbesondere um 20 g/l, einsetzt.

Darüber hinaus erweist es sich als vorteilhaft, pyrogene Kieselsäure mit großen Oberflächen und damit kleinen Primärteilchen zu wählen. Nach einer günstigen Ausführungsform des erfindungsgemäßen Verfahrens setzt man Kieselsäure mit BET-Oberflächen zwischen 100 und 480, insbesondere 250 bis 300 $m^2/g$ ein.

Eine vollständige Benetzung der Primärteilchen kann bereits erzielt werden, wenn man 5 bis 20, insbesondere 7 bis 15 Gew.-% Wasser unter gleichmäßiger Verteilung in die Kieselsäure einarbeitet. Da das eingearbeitete Wasser wieder wegzutrocknen ist, wird aus wirtschaftlichen Gründen eine möglichst geringe Wassermenge angestrebt. Die erforderliche Menge hängt jedoch in gewissem Umfang von der Art der Einarbeitung ab.

Der Strukturaufbau gemäß dem erfindungsgemäßen Verfahren kann merklich gefördert werden, wenn man dem Wasser basisch reagierende Verbindungen, wie zum Beispiel Ammoniak, Natrium-, Kaliumhydroxid, wasserlösliche Amine, Wasserglas o.ä. zusetzt. Die Zusatzmengen werden dabei zweckmäßigerweise so gewählt, daß sich im Wasser ein pH-Wert von 7 bis 14, vorzugsweise 8 bis 12, insbesondere 10 bis 11, einstellt.

Die eingesetzten Alkalien wirken als Lösungsvermittler für Kieselsäure und bewirken eine Erhöhung der Makroporosität der Verfahrensprodukte.

Anstelle alkalischer Verbindungen können dem Wasser auch freie Kieselsäure oder hydrolytische Kieselsäure und/oder Alkali freisetzende Substanzen zugesetzt werden.
Freie zum Beispiel durch Ansäuern oder Ionenaustausch von Silikatlösungen oder durch hydrolytische Spaltung Siliciumorganischer Verbindungen, zum Beispiel von Tetramethylsilikat, erzeugte Kieselsäure fördert den Strukturaufbau ebenfalls.

Eine hydrolytisch Alkali und Kieselsäure freisetzende Substanz ist zum Beispiel Natriummethylsilikonat.

Die gleichmäßige Verteilung des Wassers in der Kieselsäure kann durch Eintropfen oder Einsprühen in die mischend bewegte Kieselsäure bei Temperaturen der Kieselsäure zwischen 20 und 100, vorzugsweise 40 bis 70, insbesondere 50 bis 60 °C, vorgenommen werden. Die mischende Bewegung erfolgt zweckmäßigerweise durch Rühren.

Eine weitere Variante der Wassereinbringung besteht darin, daß man das Wasser in einen, zum Beispiel in einem Fallrohr, fluidisierten Massenstrom der Kieselsäure einsprüht.

Es hat sich ferner als vorteilhaft erwiesen, die Wasserbeladung bei mäßig erhöhten Temperaturen durchzuführen.
Dies kann geschehen, indem man entweder das einzuarbeitende Wasser oder die Kieselsäure oder beide Komponenten vorerwärmt. So kann das einzuarbeitende Wasser eine Temperatur zwischen 20 und 100, vorzugsweise 50 bis 100, insbesondere 90 bis 100 °C haben.

Man kann den Strukturaufbau auch durch kurzzeitige Dämpfung der beladenen Kieselsäure im abgeschlossenen Raum fördern. Das Dämpfen führt zu einer besonders guten Wasserverteilung. Dabei hat sich als günstig erwiesen, die wasserbeladene Kieselsäure vor der Trocknung im abgeschlossenen Gefäß ca. 5 bis 60, vorzugsweise 10 bis 30, insbesondere um 20 Minuten, bei Temperaturen bis zum Siedepunkt des Wassers, vorzugsweise 50 bis 80, insbesondere um 60 °C, zu dämpfen.

Eine weitere Möglichkeit zur Verbesserung der Wasserverteilung besteht darin, daß man die wasserbeladene Kieselsäure beispielsweise auf Stift- oder Luftstrahlmühlen vermahlt.

Es wird dann getrocknet, wobei vermutlich die präformierte Struktur über die oberflächig angelösten beziehungsweise oberflächig mit freier Kieselsäure belegten Primärteilchen fixiert wird.

Die Art der Trocknung ist wenig kritisch.
Man kann die hergestellte Mischung von Kieselsäure und Wasser, welche phänomenologisch stets einem trockenen Pulver gleicht, zum Beispiel in Horden-, Teller-, Büttner-, Strömungs- oder Mikrowellentrockner trocknen. Die wasserbeladene Kieselsäure kann aber auch unter Einsparung einer getrennten Verfahrensstufe in einer Dampf- oder Luftstrahlmühle gleichzeitig vermahlen und getrocknet werden.

Sofern eine separate Trocknung der nach Beladung mit Wasser erhaltenen pulverförmigen Mischung durchgeführt wird, kann man eine Trockenvermahlung auf einer Stift- oder Luftstrahlmühle anschließen.

Ein weiterer Gegenstand der Erfindung ist ein Verfahren zur Herstellung der oberflächenmodifizierten, aerogelartigen, strukturierten Kieselsäure, welches dadurch gekennzeichnet ist, daß man eine aerogelartige, strukturierte Kieselsäure vorlegt, gegebenenfalls zuerst mit Wasser oder mit angesäuertem Wasser und anschließend mit dem Silanisierungsmittel, welches gegebenenfalls in einem Lösungsmittel gelöst sein kann, besprüht, nachmischt und die Mischung tempert.

Als Lösungsmittel für das Silanisierungsmittel kann man zum Beispiel Ethanol einsetzen. Die Temperung kann batchweise zum Beispiel in einem Trockenschrank oder kontinuierlich durchgeführt werden.
Gegebenenfalls kann man die Temperung unter einer Schutzgasatmosphäre durchführen.

Nachdem das Sprühen beendet ist, wird noch 15 bis 30 Min. nachgemischt und anschließend 1 bis 4 h bei 100 bis 400 °C getempert.

Das eingesetzte Wasser kann mit einer Säure, zum Beispiel Salzsäure, bis zu einem pH-Wert von 7 bis 1 angesäuert sein.

Die Silanisierung kann man durchführen, indem man die Kieselsäure mit dem Silanisierungsmittel bei Raumtemperatur besprüht und das Gemisch anschließend bei einer Temperatur von 105 bis 400 °C über einen Zeitraum von 1 bis 6 h thermisch behandelt.

Eine alternative Methode der Silanisierung der Kieselsäure kann man durchführen, indem man die Kieselsäure mit dem Silanisierungsmittel in Dampfform behandelt und das Gemisch anschließend bei einer Temperatur von 200 bis 800 °C über einen Zeitraum von 0,5 bis 6 h thermisch behandelt.

Die thermische Behandlung kann unter Schutzgas, wie zum Beispiel Stickstoff, erfolgen.

Die Silanisierung kann man in beheizbaren Mischern und Trocknern mit Sprüheinrichtungen kontinuierlich oder ansatzweise durchführen. Geeignete Vorrichtungen können zum Beispiel sein: Pflugscharmischer, Teller-, Wirbelschichtoder Fließbetttrockner.

Zur Oberflächenmodifizierung beziehungsweise Silanisierung können Halogensilane, Alkoxysilane, Silazane und/oder Siloxane eingesetzt werden. Es können auch mehrere dieser Verbindungen als Mischung oder nacheinander eingesetzt werden.

Insbesondere können die folgenden Stoffe eingesetzt werden:

a) Organosilane des Types $(RO)_3Si(C_nH_{2n+1})$ und $(RO)_3Si(C_nH_{2n-1})$
R = Alkyl, wie zum Beispiel Methyl-, Ethyl-, n-Propyl-, i-Propyl-, Butyl-
n = 1 - 20

b) Organosilane des Types $R'_x(RO)_ySi(C_nH_{2n+1})$ und $(RO)_3Si(C_nH_{2n+1})$
R = Alkyl, wie zum Beispiel Methyl-, Ethyl-, n-Propyl-, i-Propyl-, Butyl-
R' = Alkyl, wie zum Beispiel Methyl-, Ethyl-, n-Propyl-, i-Propyl-, Butyl-
R'=Cycloalkyl
n = 1 - 20
x+y = 3
x = 1,2
y = 1,2

c) Halogenorganosilane des Types $X_3Si(C_nH_{2n+1})$ und
$X_3Si\ (C_nH_{2n-1})$
X = Cl, Br
n = 1 - 20

d) Halogenorganosilane des Types $X_2(R')Si(C_nH_{2n+1})$ und
$X_2(R')Si(C_nH_{2n-1})$
X = Cl, Br
R' = Alkyl, wie zum Beispiel Methyl-, Ethyl-, n-Propyl-, i-Propyl-, Butyl-
R'=Cycloalkyl
n = 1 - 20

e) Halogenorganosilane des Types $X(R')_2Si(C_nH_{2n+1})$ und
$X\ (R')_2Si(C_nH_{2n-1})$
X = Cl, Br
R' = Alkyl, wie zum Beispiel Methyl-, Ethyl-, n-Propyl-, i-Propyl-, Butyl-
R'=Cycloalkyl
n = 1 - 20

f) Organosilane des Types $(RO)_3Si(CH_2)_m\text{-}R'$
R = Alkyl, wie Methyl-, Ethyl-, Propyl-
m = 0,1 - 20
R' = Methyl-, Aryl (zum Beispiel $-C_6H_5$, substituierte Phenylreste)
$-C_4F_9$, $OCF_2\text{-}CHF\text{-}CF_3$, $-C_6F_{13}$, $-O\text{-}CF_2\text{-}CHF_2$
$-NH_2$, $-N_3$, -SCN, $-CH{=}CH_2$, $-NH\text{-}CH_2\text{-}CH_2\text{-}NH_2$,
$-N\text{-}(CH_2\text{-}CH_2\text{-}NH_2)_2$
$-OOC(CH_3)C = CH_2$
$-OCH_2\text{-}CH(O)CH_2$

-NH-CO-N-CO-$(CH_2)_5$
-NH-COO-$CH_3$, -NH-COO-$CH_2$-$CH_3$, -NH-$(CH_2)_3$Si$(OR)_3$
-$S_x$-$(CH_2)_3$Si$(OR)_3$
-SH
-NR'R"R"' (R' = Alkyl, Aryl; R" = H, Alkyl, Aryl; R"' = H, Alkyl, Aryl, Benzyl, $C_2H_4$NR"" R""' mit R"" = A, Alkyl und R""' = H, Alkyl)

g) Organosilane des Typs $(R")_x(RO)_y$Si$(CH_2)_m$-R'
R" = Alkyl x+y = 3
= Cycloalkyl x = 1,2
y = 1,2
m = 0,1 bis 20
R' = Methyl-, Aryl (zum Beispiel -$C_6H_5$ substituierte Phenylreste)
-$C_4F_9$, -$OCF_2$-CHF-$CF_3$, -$C_6F_{13}$, -O-$CF_2$-$CHF_2$
-$NH_2$, -$N_3$, -SCN, -CH=$CH_2$, -NH-$CH_2$-$CH_2$-$NH_2$,
-N-$(CH_2$-$CH_2$-$NH_2)_2$
-OOC$(CH_3)$C = $CH_2$
-$OCH_2$-CH(O)$CH_2$
- NH-CO-N-CO-$(CH_2)_5$
-NH-COO-$CH_3$, -NH-COO-$CH_2$-$CH_3$, -NH-$(CH_2)_3$Si$(OR)_3$
-$S_x$-$(CH_2)_3$Si$(OR)_3$
-SH -
-NR'R"R"' (R' = Alkyl, Aryl; R" = H, Alkyl, Aryl; R"' = H, Alkyl, Aryl, Benzyl, $C_2H_4$NR"" R""' mit R"" = A, Alkyl und R""' = H, Alkyl)

h) Halogenorganosilane des Types $X_3$Si$(CH_2)$m R'
X = Cl, Br
m = 0,1 - 20
R' = Methyl-, Aryl (zum Beispiel -$C_6H_5$, substituierte Phenylreste)
-$C_4F_9$, -$OCF_2$-CHF-$CF_3$, -$C_6F_{13}$, -O-$CF_2$-$CHF_2$
-$NH_2$, -$N_3$, -SCN, -CH=$CH_2$,
-NH-$CH_2$-$CH_2$-$NH_2$
-N-$(CH_2$-$CH_2$-$NH_2)_2$
-OOC$(CH_3)$C = $CH_2$
-$OCH_2$-CH(O)$CH_2$
-NH-CO-N-CO-$(CH_2)_5$
-NH-COO-$CH_3$, -NH-COO-$CH_2$-$CH_3$, -NH-$(CH_2)_3$Si$(OR)_3$
-$S_x$-$(CH_2)_3$Si$(OR)_3$
-SH

i) Halogenorganosilane des Types (R)$X_2$Si$(CH_2)_m$-R'
X = Cl, Br
R = Alkyl, wie Methyl,- Ethyl-, Propyl -
m = 0,1 - 20
R' = Methyl-, Aryl (z.B. -$C_6H_5$, substituierte Phenylreste)
-$C_4F_9$, -$OCF_2$-CHF-$CF_3$, -$C_6F_{13}$, -O-$CF_2$-$CHF_2$
-$NH_2$, -$N_3$, -SCN, -CH=$CH_2$,-NH-$CH_2$-$CH_2$-$NH_2$,
-N-$(CH_2$-$CH_2$-$NH_2)_2$
-OOC$(CH_3)$C = $CH_2$
-$OCH_2$-CH(O)$CH_2$
-NH-CO-N-CO-$(CH_2)_5$
-NH-COO-$CH_3$, -NH-COO-$CH_2$-$CH_3$, -NH-$(CH_2)_3$Si$(OR)_3$,
wobei R = Methyl-, Ethyl-, Propyl-, Butyl- sein kann
-$S_x$-$(CH_2)_3$Si$(OR)_3$, wobei R = Methyl-, Ethyl-, Propyl-, Butyl- sein kann
- SH

j) Halogenorganosilane des Types $(R)_2$X Si$(CH_2)_m$-R'
X = Cl, Br

R = Alkyl
m = 0,1 - 20
R' = Methyl-, Aryl (z.B. $-C_6H_5$, substituierte Phenylreste)
$-C_4F_9$, $-OCF_2-CHF-CF_3$, $-C_6F_{13}$, $-O-CF_2-CHF_2$
$-NH_2$, $-N_3$, -SCN, $-CH=CH_2$, $-NH-CH_2-CH_2-NH_2$,
$-N-(CH_2-CH_2-NH_2)_2$
$-OOC(CH_3)C = CH_2$
$-OCH_2-CH(O)CH_2$
$-NH-CO-N-CO-(CH_2)_5$
$-NH-COO-CH_3$, $-NH-COO-CH_2-CH_3$, $-NH-(CH_2)_3Si(OR)_3$
$-S_x-(CH_2)_3Si(OR)_3$
-SH

k) Silazane des Types

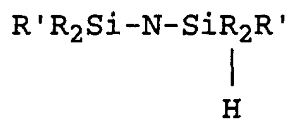

R = Alkyl, Vinyl, Aryl
R' = Alkyl, Vinyl, Aryl

l) Cyclische Polysiloxane des Types D 3, D 4, D 5, wobei unter D 3, D 4 und D 5 cyclische Polysiloxane mit 3,4 oder 5 Einheiten des Typs $-O-Si(CH_3)_2-$ verstanden wird. Z.B. Octamethylcyclotetrasiloxan = D 4

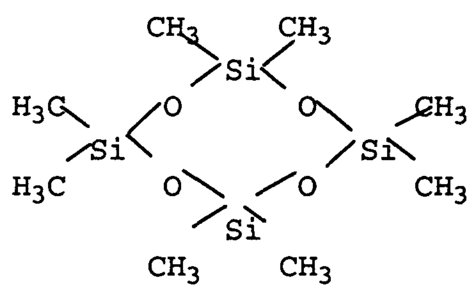

m) Polysiloxane beziehungsweise Silikonöle des Types

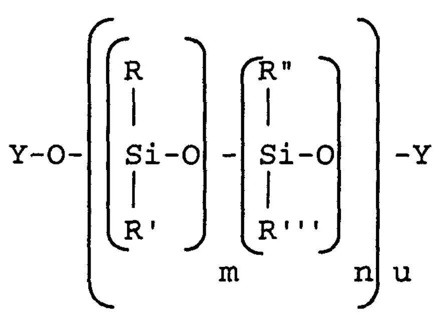

m = 0,1,2,3,...∞
n = 0,1,2,3,...∞
u = 0,1,2,3,...∞

$Y=CH_3$, H, $C_nH_{2n+1}$ n=1-20
$Y=Si(CH_3)_3$, $Si(CH_3)_2H$
$Si(CH_3)_2OH$, $Si(CH_3)_2(OCH_3)$
$Si(CH_3)_2(C_nH_{2n+1})$ n=1-20

R = Alkyl, wie $C_nH_{2n+1}$, wobei n = 1 bis 20 ist, Aryl, wie Phenyl- und substituierte Phenylreste, $(CH_2)_n-NH_2$, H
R' = Alkyl, wie $C_nH_{2n+1}$, wobei n = 1 bis 20 ist, Aryl, wie Phenyl- und substituierte Phenylreste, $(CH_2)_n-NH_2$, H
R'' = Alkyl, wie $C_nH_{2n+1}$, wobei n = 1 bis 20 ist, Aryl, wie Phenyl- und substituierte Phenylreste, $(CH_2)_n-NH_2$, H

R''' = Alkyl, wie $C_nH_{2n+1}$, wobei n = 1 bis 20 ist, Aryl, wie Phenyl- und substituierte Phenylreste, $(CH_2)_n$-$NH_2$, H

Bevorzugt kann 3-Methacryloxypropyltrimethoxysilan eingesetzt werden.

Bevorzugt kann man als Silanisierungsmittel Trimethoxyoctylsilan und/oder Hexamethyldisilazan einsetzen.

Bevorzugt kann 3-Glycidyloxypropyltrimethoxysilan als Silanisierungsmittel eingesetzt werden.

Insbesondere können als Silazane die folgenden Stoffe eingesetzt werden:

Silazane des Types

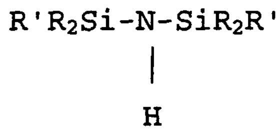

R = Alkyl
R' = Alkyl, Vinyl
sowie zum Beispiel Hexamethyldisilazan.

Insbesondere kann Dimethylpolysiloxan eingesetzt werden.

Die erfindungsgemäße oberflächenmodifizierte, aerogelartige, strukturierte Kieselsäure kann als Mattierungsmittel in Oberflächenbeschichtungen, wie zum Beispiel Lacken, eingesetzt werden.

## <u>Beispiele</u>

### Herstellung der erfindungsgemäßen Kieselsäure

Es wird eine aerogelartige strukturierte Kieselsäure mit folgenden phsikalisch-chemischen Eigenschaften eingesetzt:

| | |
|---|---|
| BET-Oberfläche $m^2/g$ | 264 |
| pH-Wert | 6,8 |
| Trocknungsverlust % | 2,3 |
| Glühverlust % | 2,4 |
| Stampfdicht g/l | 48 |
| Kohlenstoffgehalt % | 0 |
| DBP-Zahl % | 380 |

Diese aerogelartige strukturierte Kieselsäure wird in einem Mischer vorgelegt und unter intensivem Mischen gegebenenfalls zunächst mit Wasser und anschließend mit dem Silanisierungsmittel besprüht. Nachdem das Sprühen beendet ist, wird noch 15 min nachgemischt und anschließend in einem Trockenschrank getempert.
Die Parameter zur Herstellung der erfindungsgemäßen Kieselsäure sind in der Tabelle 1, und die physikalischchemische Daten in Tabelle 2 aufgeführt.

Tabelle 1:

| Herstellung der erfindungsgemäßen Kieselsäure | | | | | |
|---|---|---|---|---|---|
| Beispiel | Silanisierungsmittel* | Teile SM**/ 100 Teile KS*** | Teile $H_2O$/ 100 Teile KS*** | Tempertemperatur [°C] | Temperzeit [h] |
| 1 | AMEO | 10 | 0 | 120 | 2 |

*Silanisierungsmittel: AMEO = 3-Aminopropyltriethoxysilan
MEMO = 3-Methacryloxypropyltrimethoxysilan
OCTMO = Octyltrimethoxysilan
HMDS = Hexamethyldisilazan
GLYMO = Glycidyloxypropyltrimethoxysilan

**SM = Silanisierungsmittel

***KS = Kieselsäure

Tabelle 1: (fortgesetzt)

| Herstellung der erfindungsgemäßen Kieselsäure | | | | | |
|---|---|---|---|---|---|
| Beispiel | Silanisierungsmittel* | Teile SM**/ 100 Teile KS*** | Teile $H_2O$/ 100 Teile KS*** | Tempertem-peratur [°C] | Temperzeit [h] |
| 2 | AMEO | 20 | 2 | 120 | 2 |
| 3 | MEMO | 10 | 2 | 120 | 2 |
| 4 | MEMO | 20 | 2 | 120 | 2 |
| 5 | OCTMO | 10 | 2 | 120 | 2 |
| 6 | OCTMO | 20 | 2 | 120 | 2 |
| 7 | HMDS | 10 | 2 | 120 | 2 |
| 8 | HMDS | 20 | 2 | 120 | 2 |
| 9 | HMDS | 10 | 0 | 120 | 2 |
| 10 | HMDS | 20 | 0 | 120 | 2 |
| 11 | GLYMO | 10 | 0 | 120 | 2 |
| 12 | GLYMO | 20 | 2 | 120 | 2 |

*Silanisierungsmittel: AMEO = 3-Aminopropyltriethoxysilan
MEMO = 3-Methacryloxypropyltrimethoxysilan
OCTMO = Octyltrimethoxysilan
HMDS = Hexamethyldisilazan
GLYMO = Glycidyloxypropyltrimethoxysilan

**SM = Silanisierungsmittel

***KS = Kieselsäure

Tabelle 2:

| Physikalisch-chemische Daten der erfindungsgemäßen Kieselsäure | | | | | | | |
|---|---|---|---|---|---|---|---|
| Beispiel | TV [%] | GV [%] | pH | DBP [%] | SD [g/l] | BET[$m^2$/ g] | C [%] |
| 1 | 1,2 | 4,3 | 9,1 | 339 | 35 | 205 | 2,0 |
| 2 | 0,8 | 6,2 | 10,2 | - | 38 | - | 3,4 |
| 3 | 0,6 | 8,2 | 5,3 | 312 | 37 | 184 | 3,7 |
| 4 | 1,8 | 12,3 | 5,5 | 341 | 39 | - | 6,8 |
| 5 | 0,8 | 8,8 | 5,1 | 350 | 33 | - | 4,8 |
| 6 | 2,4 | 13,0 | 5,4 | 320 | 36 | - | 8,8 |
| 7 | 1,0 | 2,5 | 6,6 | 329 | 36 | - | 2,0 |
| 8 | 0,4 | 2,8 | 6,4 | 331 | 46 | - | 2,6 |
| 9 | 1,0 | 2,6 | 7,1 | 317 | 40 | - | 2,1 |
| 10 | 1,0 | 2,6 | 6,8 | 327 | 42 | - | 2,2 |
| 11 | 0,6 | 5,0 | 6,0 | - | 40 | - | 2,9 |
| 12 | 0,5 | 9,7 | 6,2 | 321 | 44 | - | 5,5 |

**Anwendungstechnische vorteile**

Die erfindungsgemäßen Kieselsäuren werden in 2 Lacksystemen geprüft. In dem Lacksystem 1 und dem Lacksystem 2 zeigen sich die folgenden Vorteile:

- einfachere und schnellere Einarbeitbarkeit

- weniger verdickende Wirkung, dadurch dünnflüssigere Lacke möglich
- weniger verdickende Wirkung, dadurch höhere Mattierungsmittelkonzentration möglich.

In dem Lacksystem 2 werden zusätzlich die folgenden Vorteile festgestellt:

- verbesserte Transparenz bei vergleichbarer Mattierung
- verbesserte Chemikalienbeständigkeit bei vergleichbarer Mattierung

Das Lacksystem 1 hat die folgende Zusammensetzung:

| Einwaagefaktor: 25 | | | |
|---|---|---|---|
| **Rohstoff** | **Kontrollnummer** | **Menge** | **Einwaage** |
| Laromer PO 83 F | | 83,00 | 2075,00 |
| TPGDA | | 12,00 | 300,00 |
| Irgacure 500 | | 4,00 | 100,00 |
| Dow Corning PA 57 | | 1,00 | 25,00 |
| **Gesamt** | | **100,00** | **2500,00** |

| | | |
|---|---|---|
| Laromer PO 83 F | Aminmodifiziertes Oligoetheracrylat | BASF |
| TPGDA | Tripropylenglykoldiacrylat | BASF |
| Irgacure 500 | Photoinitiator (Gemisch aus Benzophenon und 1-Hydroxycyclohexylphenylketon) | Ciba |
| Dow Corning PA 57 | silikonhaltiges Verlaufsadditiv | Dow Corning |

Das Lacksystem 2 hat die folgende Zusammensetzung:

| Einwaagefaktor: x40 | | | |
|---|---|---|---|
| Rohstoff | Gehalt | Menge | Einwaage |
| Butylacetat 98% | | 8,30 | 332,00 |
| Ethoxypropylacetat | | 16,50 | 660,00 |
| Desmophen 800 | | 15,00 | 600,00 |
| Desmophen 1100 | | 20,00 | 800,00 |
| CAB 381-0,5 | 10,00 % in Butylacetat 98% | 3,00 | 120,00 |
| Mowilith 20 | 50,00 % in Ethylacetat | 3,00 | 120,00 |
| Baysilone OL 17 | 10,00 % in Xylol | 0,10 | 4,00 |
| BYK 361 | | 0,30 | 120,00 |
| Xylol | | 33,80 | 1352,00 |
| **Gesamt** | | **100,00** | **4000,00** |

Im Verhältnis 100:50 härten mit Desmodur L 75

| | | |
|---|---|---|
| Desmophen 800 | Polyesterpolyol | Bayer AG |
| Desmophen 1100 | Polyesterpolyol | Bayer AG |
| CAB 381-0,5 | Celluloseacetobutyrat | Krahn Chemie |
| Mowilith 20 | Vinylacetat-Homopolymerisat | Synthomer |
| Baysilone OL 17 | Polyethersiloxan | Borchers |
| BYK 361 | Polyacrylatcopolymer | Byk Chemie |
| Desmodur L 75 | Aromatisches Polysocyanat | Bayer AG |

## Bestimmung der physikalisch-chemischen Kenndaten

### BET-Oberfläche

Die BET-Oberfläche wird gemäß DIN 66 131 mit Stickstoff bestimmt.

### Stampfdichte

Bestimmung der Stampfdichte in Anlehnung an DIN ISO 787/XI

Grundlagen der Stampfdichtebestimmung

Die Stampfdichte (früher Stampfvolumen) ist gleich dem Quotienten aus der Masse und dem Volumen eines Pulvers nach dem Stampfen im Stampfvolumeter unter festgelegten Bedingungen. Nach DIN ISO 787/XI wird die Stampfdichte in g/$cm^3$ angegeben. Wegen der sehr niedrigen Stampfdichte der Oxide wird hier der Wert in g/l angegeben. Ferner wird auf die Trocknung und Siebung sowie auf die Wiederholung des Stampfvorganges verzichtet.

Geräte zur Stampfdichtebestimmung

Stampfvolumeter
Meßzylinder
Laborwaage (Ablesbarkeit 0.01 g)

Durchführung der Stampfdichtebestimmung

200 ± 10 ml Oxid werden in den Meßzylinder des Stampfvolumeters so eingefüllt, daß keine Hohlräume verbleiben und die Oberfläche waagerecht ist.
Die Masse der eingefüllten Probe wird auf 0,01 g genau bestimmt. Der Meßzylinder mit der Probe wird in den Meßzylinderhalter des Stampfvolumeters eingesetzt und 1250 mal gestampft.
Das Volumen des gestampften Oxids wird auf 1 ml genau abgelesen.

Auswertung der Stampfdichtebestimmung

$$\text{Stampfdichte (g/l)} = \frac{\text{g Einwaage x 1000}}{\text{ml abgelesenes Volumen}}$$

### pH-Wert

Der pH-Wert wird in 4 %iger wäßriger Dispersion bestimmt, bei hydrophoben Oxiden in Wasser: Methanol 1:1.

Reagenzien zur pH-Wert-Bestimmung

destilliertes oder vollentsalztes Wasser, pH > 5.5 Methanol, p.a.
Pufferlösungen pH 7.00 pH 4.66

Geräte zur pH-Wert-Bestimmung

Laborwaage, (Ablesbarkeit 0,1 g)
Becherglas, 250 ml
Magnetrührer
Magnetstab, Länge 4 cm
kombinierte pH-Elektrode
pH-Meßgerät
Dispensette, 100 ml

Arbeitsvorschrift zur Bestimmung des pH-Wertes

Die Bestimmung erfolgt in Anlehnung an DIN/ISO 787/IX: Eichung:Vor der pH-Wertmessung wird das Meßgerät mit den Pufferlösungen geeicht. Werden mehrere Messungen hintereinander durchgeführt, genügt eine einmalige Eichung.

4 g hydrophiles Oxid werden in einem 250 ml Becherglas mit 96 g (96ml) Wasser unter Zuhilfenahme einer Dispensette und fünf Minuten bei eingetauchter pH-Elektrode mit einem Magnetrührer gerührt (Drehzahl ca. 1000 $min^{-1}$).

4 g hydrophobes Oxid werden in einem 250 ml Becherglas mit 48 g (61 ml) Methanol angeteigt und die Suspension mit 48 g (48 ml) Wasser verdünnt und fünf Minuten bei eingetauchter pH-Elektrode mit einem Magnetrührer gerührt (Drehzahl ca. 1000 $min^{-1}$).
Nach Abstellen des Rührers wird der pH-Wert nach einer Standzeit von einer Minute abgelesen. Das Ergebnis wird mit einer Dezimale ausgewiesen.

**Trocknungsverlust**

Im Gegensatz zur in der DIN ISO 787 II genannten Einwaage von 10 g wird für die Trocknungsverlust-Bestimmung eine 1 g-Einwaage verwendet.
Der Deckel wird vor dem Abkühlen aufgesetzt. Eine zweite Trocknung wird nicht vorgenommen.

Ca. 1 g der Probe wird unter Vermeidung von Staubentwicklung in ein bei 105 °C getrocknetes Wägeschälchen mit Schliffdeckel auf 0,1 mg genau eingewogen und zwei Stunden im Trockenschrank bei 105 °C getrocknet. Nach dem Erkalten bei aufgesetztem Deckel im Exsikkator über Blaugel wird zurückgewogen.

$$\%\ \text{Trocknungsverlust bei } 105\ ^\circ\text{C} = \frac{\text{g Gewichtsverlust}}{\text{g Einwaage}} \times 100$$

Das Ergebnis wird mit einer Dezimale ausgewiesen.

**Glühverlust**

Geräte zur Bestimmung des Glühverlustes

Porzellantiegel mit Tiegeldeckel
Muffelofen
Analysenwaage (Ablesbarkeit 0.1 mg)
Exsikkator

Durchführung der Glühverlustbestimmung

Abweichend von DIN 55 921 werden 0.3 - 1 g der nicht vorgetrockneten Substanz in einen zuvor geglühten Porzellantiegel mit Tiegeldeckel auf 0.1 mg genau eingewogen und 2 Stunden bei 1000 °C in einem Muffelofen geglüht. Ein Verstauben ist sorgfältig zu vermeiden. Als günstig hat es sich erwiesen, wenn die eingewogenen Proben in den noch kalten Muffelofen gestellt werden.
Durch das langsame Aufheizen des Ofens werden stärkere Luftturbulenzen in den Porzellantiegeln vermieden.
Nach Erreichen von 1000 °C wird noch 2 Stunden weitergeglüht. Anschließend wird mit einem Tiegeldeckel abgedeckt und der Tiegel im Exsikkator über Blaugel der Gewichtsverlust ermittelt.

Auswertung der Glühverlustbestimmung

Da der Glühverlust auf die 2 h bei 105 °C getrocknete Probe bezogen wird, ergibt sich folgende Berechnungsformel:

$$\%\ \text{Glühverlust} = \frac{m_0 \times \frac{100 - TV}{100} - m_1}{m_0 \times \frac{100 - TV}{100}} \times 100$$

$m_0$ = Einwaage (g)

TV = Trocknungsverlust (%)
$m_1$ = Gewicht der geglühten Probe (g)
Das Ergebnis wird mit einer Dezimale ausgewiesen.

**DBP-Zahl**

Geräte zur DBP-Zahlbestimmung

Oberschalige Waage
Polybecher (250 ml)
Brabender Plastograph mit Dosier-Einheit

Reagenz

Dibutylphtalat (techn.)

Durchführung

1. Überprüfung des Abschaltpunktes

- Plastograph ohne Dosierpumpe einschalten.
- Schutzklappe für Bedienungsteil öffnen (unter dem Display)
- "Func" - Taste drücken, die Anzeige zeigt abwechselnd den Abschaltwert "1000" und den Alarm "Al H.A." an, nach 5 sec. erscheint die Anzeige wieder im Normalmodus.

2. Kalibrierung

- Plastograph ohne Dosierpumpe einschalten.
- Kneter einschalten (beide Starttasten gleichzeitig drücken).
- bei gedrückter "Cal"-Taste einmal die "Funk"-Taste drücken, die Anzeige zeigt abwechselnd den aktuellen Nullpunkt und "Lo S.C." an.
- nochmals die "Cal"-Taste drücken, nach vier Sekunden (Kalibrierung), zeigt das Gerät den aktuellen Gesamtbereich "10000" und "Fu S.C." an.
- nochmals die "Cal"-Taste drücken, nach vier Sekunden (Kalibrierung), zeigt das Gerät den reibungskorrigierten Nullpunkt "tare" an.
- nochmals die "Cal"-Taste drücken und 5 sec. warten.
- Arbeitsschritte "Abschaltpunkt" und "Kalibriervorgang" bei Bedarf einmal täglich vor den Messungen durchführen !

3. Messung

- 12,5 g Probe werden in einen Polybecher eingewogen und in die Knetkammer gegeben. Auf Anweisung kann die Einwaage auch hiervon abweichen (z.B. 8 oder 20 g).Die DBP-Dosier-Einheit wird einschaltet. Sobald der Füllvorgang (Anzeige F) abgeschlossen ist, ist der Plastograph betriebsberei.
- Durch gleichzeitiges Drücken der Start-Tasten beginnt die Messung.
- Die Dosier-Einheit dosiert 4ml DBP/min bis der eingestellte Abschaltpunkt (1000) erreicht ist.
- Das Gerät schaltet automatisch ab.
- An der Anzeige der Dosier-Einheit kann nun der Verbrauch an DBP abgelesen werden.

Berechnung

$$DBP\ (\%) = \frac{\text{Anzeige Dosimat x 1.047 x 100}}{\text{Einwaage (g)}}$$

Ergebnis immer mit Einwaage angeben.

**Patentansprüche**

1. Aerogelartige, strukturierte Kieselsäuren, **dadurch gekennzeichnet, daß** sie oberflächenmodifiziert ist.

2. Verfahren zur Herstellung der aerogelartigen, strukturierten Kieselsäure gemäß Anspruch 1, **dadurch gekennzeichnet, daß** man eine aerogelartige, strukturierte Kieselsäure vorlegt, gegebenenfalls zuerst mit Wasser oder mit angesäuertem Wasser und anschließend mit dem Silanisierungsmittel, welches gegebenenfalls in einem Lösungsmittel gelöst sein kann, besprüht, nachmischt und die Mischung tempert.

3. Verwendung der aerogelartigen, strukturierten Kieselsäure gemäß Anspruch 1 als Mattierungsmittel in Oberflächenbeschichtungen.

Europäisches Patentamt

# EUROPÄISCHER RECHERCHENBERICHT

Nummer der Anmeldung
EP 02 02 8311

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 018, no. 168 (M-1580), 22. März 1994 (1994-03-22) & JP 05 337685 A (SHIKOKU CHEM CORP), 21. Dezember 1993 (1993-12-21) * Zusammenfassung * | 1,3 | C01B33/158 C09C1/30 C09D7/12 |
| X | EP 0 808 880 A (DEGUSSA) 26. November 1997 (1997-11-26) * das ganze Dokument * | 2 | |
| X | WO 98 23366 A (HOECHST RESEARCH & TECHNOLOGY DEUTSCHLAND GMBH & CO) 4. Juni 1998 (1998-06-04) * Ansprüche 39,43 * | 1 | |
| X | WO 99 36355 A (CABOT CORP) 22. Juli 1999 (1999-07-22) * Seite 4, Zeile 25 - Zeile 34 * * Seite 6, Zeile 3 - Zeile 10 * * Ansprüche 1,3 * | 1 | RECHERCHIERTE SACHGEBIETE (Int.Cl.7) |
| A | DE 24 03 783 A (BAYER AG) 14. August 1975 (1975-08-14) * das ganze Dokument * | 2 | C01B C09D C09C |
| A | US 4 208 316 A (BODE RUDOLF ET AL) 17. Juni 1980 (1980-06-17) * Ansprüche 1,2 * * Beispiel 2 * | 2 | |
| D,A | DE 24 14 478 A (DEGUSSA) 2. Oktober 1975 (1975-10-02) * Beispiele 1,17,19 * | | |

Der vorliegende Recherchenbericht wurde für alle Patentansprüche erstellt

| Recherchenort | Abschlußdatum der Recherche | Prüfer |
|---|---|---|
| DEN HAAG | 27. Mai 2003 | Rigondaud, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 02 02 8311

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2003

| Im Recherchenbericht angeführtes Patentdokument | Datum der Veröffentlichung | Mitglied(er) der Patentfamilie | Datum der Veröffentlichung |
|---|---|---|---|
| JP 05337685 A | 21-12-1993 | KEINE | |
| EP 0808880 A | 26-11-1997 | DE 19616781 A1 | 06-11-1997 |
| | | CA 2203726 A1 | 26-10-1997 |
| | | CN 1167729 A ,B | 17-12-1997 |
| | | DE 59709069 D1 | 13-02-2003 |
| | | EP 0808880 A2 | 26-11-1997 |
| | | JP 10087317 A | 07-04-1998 |
| | | KR 260325 B1 | 01-07-2000 |
| | | US 5959005 A | 28-09-1999 |
| WO 9823366 A | 04-06-1998 | DE 19648798 A1 | 04-06-1998 |
| | | WO 9823366 A1 | 04-06-1998 |
| | | EP 0948395 A1 | 13-10-1999 |
| | | JP 2001504756 T | 10-04-2001 |
| | | KR 2000057244 A | 15-09-2000 |
| | | US 2001034375 A1 | 25-10-2001 |
| WO 9936355 A | 22-07-1999 | AU 2310199 A | 02-08-1999 |
| | | DE 69906480 D1 | 08-05-2003 |
| | | EP 1047735 A2 | 02-11-2000 |
| | | WO 9936355 A2 | 22-07-1999 |
| | | US 6344240 B1 | 05-02-2002 |
| | | AU 2105499 A | 02-08-1999 |
| | | DE 69902223 D1 | 29-08-2002 |
| | | DE 69902223 T2 | 23-01-2003 |
| | | EP 1047632 A2 | 02-11-2000 |
| | | WO 9936356 A2 | 22-07-1999 |
| | | US 6159540 A | 12-12-2000 |
| DE 2403783 A | 14-08-1975 | DE 2403783 A1 | 14-08-1975 |
| US 4208316 A | 17-06-1980 | KEINE | |
| DE 2414478 A | 02-10-1975 | DE 2414478 A1 | 02-10-1975 |
| | | AT 380003 B | 25-03-1986 |
| | | AT 228575 A | 15-08-1985 |
| | | AU 7858175 A | 26-08-1976 |
| | | BE 827176 A1 | 25-09-1975 |
| | | CA 1033640 A1 | 27-06-1978 |
| | | CH 611862 A5 | 29-06-1979 |
| | | DD 119027 A5 | 05-04-1976 |
| | | DD 124740 A5 | 09-03-1977 |
| | | DK 126075 A ,B, | 27-09-1975 |
| | | FR 2265680 A1 | 24-10-1975 |
| | | GB 1495628 A | 21-12-1977 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 02 02 8311

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2003

| Im Recherchenbericht angeführtes Patentdokument | Datum der Veröffentlichung | Mitglied(er) der Patentfamilie | Datum der Veröffentlichung |
|---|---|---|---|
| DE 2414478 A | | IT 1030296 B | 30-03-1979 |
| | | JP 1109031 C | 13-08-1982 |
| | | JP 50130698 A | 16-10-1975 |
| | | JP 56044012 B | 16-10-1981 |
| | | MX 147359 A | 22-11-1982 |
| | | NL 7502932 A ,B, | 30-09-1975 |
| | | SE 406458 B | 12-02-1979 |
| | | SE 7503483 A | 29-09-1975 |
| | | US 4150101 A | 17-04-1979 |
| | | ZA 7501922 A | 25-02-1976 |

EPO FORM P0461

Für nähere Einzelheiten zu diesem Anhang : siehe Amtsblatt des Europäischen Patentamts, Nr.12/82